(19) Europäisches Patentamt / European Patent Office / Office européen des brevets

(11) **EP 1 705 209 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(51) Int Cl.:
*C08J 3/075* (2006.01)  *C08K 7/16* (2006.01)
*C08K 5/00* (2006.01)

(21) Anmeldenummer: **06110898.1**

(22) Anmeldetag: **09.03.2006**

(54) **Mikrogele in Kombination mit funktionalen Additiven**

Microgels in combination with functional additives

Microgels en combinaison avec des additifs fonctionels

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.03.2005 DE 102005014271**

(43) Veröffentlichungstag der Anmeldung:
**27.09.2006 Patentblatt 2006/39**

(73) Patentinhaber:
• **Rhein Chemie Rheinau GmbH
68219 Mannheim (DE)**
• **LANXESS Deutschland GmbH
51369 Leverkusen (DE)**

(72) Erfinder:
• **Fessenbecker, Achim, Dr.
68753, Waghäusel (DE)**

• **Galda, Patrick, Dr.
76149, Karlsruhe (DE)**
• **Ziser, Torsten, Dr.
69488, Birkenau (DE)**
• **Früh, Thomas, Dr.
67117, Limburgerhof (DE)**
• **Steppan, Günther
68723, Oftersheim (DE)**
• **Obrecht, Werner, Dr.
47447, Moers (DE)**

(74) Vertreter: **Siegers, Britta et al
Lanxess Deutschland GmbH
LIP Intellectual Property Rights
Gebäude Q 18
51369 Leverkusen (DE)**

(56) Entgegenhaltungen:
**EP-A- 1 203 786          WO-A-20/05030843**

**Beschreibung**

Die Erfindung betrifft eine Zusammensetzung, die mindestens ein Mikrogel, mindestens ein funktionales Additiv und mindestens ein nicht vernetzbares organisches Medium aufweist, Verwendungen der Zusammensetzungen, und daraus hergestellte kunststoffe, Kautschuke, Schmierstoffe, Beschichtungsmittel und thermoplastische Elastomere.

Es ist bekannt, Kautschukgele, auch modifizierte Kautschukgele, in Abmischungen mit verschiedensten Kautschuken einzusetzen, um beispielsweise den Rollwiderstand bei der Herstellung von Kfz-Reifen zu verbessern (siehe z. B. DE 42 20 563, GB-PS 10 78 400 EP 405 216 und EP 854 171).

Aus der DE-A-3742180 sind Dispersionen von silicon-haltigen Pfropfpolymerisaten in flüssigen Amiden bekannt, die ebenfalls aus wässrigen Latices hergestellt werden. Bei den dort beschriebenen Dispersionen wird das Wasser jedoch nur weitgehend abgetrennt und eine vollständige Abtrennung ist schwierig.

Mikrogel- und organische Medien enthaltende Zusammensetzungen sind grundlegend in der nicht-vorveröffentlichten internationalen Anmeldung PCT/EP2004/052290 des vorliegenden Anmelders beschrieben worden.

Die Erfinder der vorliegenden Erfindung fanden nun, dass es möglich ist, Mikrogele insbesondere in flüssigen funktionalen Additiven beispielsweise mit einem Homogenisator fein zu verteilen. Die Zerteilung der Mikrogele bis in den Primärpartikelbereich ist beispielsweise eine Voraussetzung, um die Nanoeigenschaften der Mikrogele insbesondere reproduzierbar nutzbar zu machen. Die erfindungsgemäßen, die speziellen Mikrogele enthaltenden Zusammensetzungen können eine Vielzahl neuer Anwendungen von Mikrogelen erschließen, die mit den Mikrogelen selbst bislang nicht zugänglich waren.

Die Mikrogel-Additiv-Kombinationen zeigen sehr interessante Eigenschaften, wie z.B. Rheologie, Konsistenz, Scherstabilität, Verdickungswirkung etc. So konnten die Erfinder Kombinationen aus marktüblichen flüssigen Schmierstoffadditiven und Mikrogelen herstellen, die in Kombination positive Eigenschaften beider Systeme in sich vereinen. So zeigte sich, dass ein flüssiges Additiv durch das Mikrogel oberflächlich bzw. im Netzwerk gebunden wird, in gebundener Form beispielsweise in einen Schmierstoff eingebracht werden kann, und von dort auch unter bestimmten Konditionen wieder freigesetzt wird. Überraschenderweise zeigte sich, dass es nicht nur gelingt, mit Additiven pastöse bzw. fettartige Kombinationen zu erhalten, sondern dass diese Kombinationen auch tatsächlich synergistische Wirkungen entfalten. So erhält man beispielsweise aus der Kombination eines Schwefel-funktionalisierten Olefins und eines Mikrogels ein transparentes "Additivfett", welches für Fette typische Konsistenzwerte (Tropfpunkt, Penetration) aufweist, im Gegensatz zu opaken Fettstrukturen. Setzt man dieses Additivfett in üblichen Konzentrationen in Basisfluiden ein, so erhält man eine Schmierstoffformulierung, die sich synergistisch verhält bezüglich der Messwerte, die man für die einzelnen Komponenten Additiv bzw. Mikrogel ermittelt. Weitere Kombinationen von Schwefel-haltigen Additiven bzw. Phosphor-haltigen Additiven zeigen ähnliche zumeist pastöse Konsistenz, in einigen Fällen fettartige Konsistenz.

EP 1 203 786 A offenbart eine Zusammensetzung, die ein Mikrogel und ein funktionelles Additiv, wie Phosphorylpolysulfid, umfasst.

Die vorliegende Erfindung stellt somit eine Zusammensetzung bereit, enthaltend mindestens ein Mikrogel (B), mindestens ein funktionales Additiv (C) und mindestens ein nicht vernetzbares organisches Medium (A).

Mikrogele (B)

Das in der erfindungsgemäßen Zusammensetzung verwendete Mikrogel (B) ist ein vernetztes Mikrogel. In einer bevorzugten Ausführungsform handelt es sich nicht um ein durch energiereiche Strahlung vernetztes Mikrogel. Energiereiche Strahlung meint hier zweckmäßig elektromagnetische Strahlung einer Wellenlänge von weniger als 0,1 $\mu$m. Die Verwendung von durch energiereiche Strahlung vernetzten Mikrogelen, wie beispielsweise in Chinese Journal of Polymer Science, Band 20, Nr. 2, (2002), 93 - 98, beschrieben, ist nachteilig, da durch energiereiche Strahlung vernetzte Mikrogele in industriellem Maßstab praktisch nicht hergestellt werden können. Außerdem gehen mit der Verwendung energiereicher Strahlung aus radioaktiven Strahlungsquellen wie radioaktivem Kobalt schwerwiegende Sicherheitsprobleme einher.

In einer bevorzugten Ausführungsform der Erfindung weisen die Primärpartikel des Mikrogels (B) eine annähernd kugelförmige Geometrie auf. Als Primärpartikel werden nach DIN 53206:1992-08 die durch geeignete physikalische Verfahren (Elektronenmikroskop), als Individuen erkennbare, in der kohärenten Phase dispergierten Mikrogelteilchen bezeichnet (Vgl. z. B. Römpp Lexikon, Lacke und Druckfarben, Georg Thieme Verlag, 1998). Eine "annähernd kugelförmige" Geometrie bedeutet, dass die dispergierten Primärpartikel der Mikrogele bei der Ansicht der Zusammensetzung, beispielsweise mit einem Elektronenmikroskop, erkennbar im wesentlichen eine kreisförmige Fläche abbilden. Da die Mikrogele bei der Weiterverarbeitung der erfindungsgemäßen Zusammensetzungen ihre Form bzw. Morphologie im wesentlichen nicht verändern, gelten die vorstehenden und nachstehenden Ausführungen in gleicher Weise auch für die mit der erfindungsgemäßen Zusammensetzung erhaltenen mikrogel-enthaltenden Zusammensetzungen, wie z. B. Kunststoffe, Beschichtungsmittel oder Schmierstoffe.

In den in der erfindungsgemäßen Zusammensetzung enthaltenen Primärpartikeln des Mikrogels (B) beträgt die Abweichung der Durchmesser eines einzelnen Primärpartikels, definiert als

$$[(d1 - d2) / d2] \times 100,$$

worin d1 und d2 zwei beliebige Durchmesser des Primärpartikels sind und d1 > d2 ist, bevorzugt weniger als 250 %, bevorzugter weniger als 100 %, noch bevorzugter weniger als 80 %, noch bevorzugter weniger als 50 %.

Bevorzugt weisen mindestens 80 %, bevorzugter mindestens 90 %, noch bevorzugter mindestens 95% der Primärpartikel des Mikrogels eine Abweichung der Durchmesser, definiert als

$$[(d1 - d2) / d2] \times 100,$$

worin d1 und d2 zwei beliebige Durchmesser des Primärpartikels sind und d1 > d2 ist, von weniger als 250 %, bevorzugt weniger als 100 %, noch bevorzugter weniger als 80 %, noch bevorzugter weniger als 50 % auf.

Die vorstehend erwähnte Abweichung der Durchmesser der einzelnen Partikel kann nach folgendem Verfahren bestimmt werden. Zunächst wird ein Dünnschnitt der erfindungsgemäßen verfestigten Zusammensetzung hergestellt. Dann wird eine transmissionselektronen-mikroskopische Aufnahme bei einer Vergrößerung von beispielsweise 10 000fach oder 200 000fach hergestellt. In einer Fläche von 833,7 x 828,8 nm wird an 10 Mikrogel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95% der vermessenen Mikrogel-Primärpartikeln jeweils unter 250 %, bevorzugter unter 100 %, noch bevorzugter weniger als 80 %, noch bevorzugter unter 50 %, so weisen die Mikrogel-Primärpartikeln das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden.

In der erfindungsgemäßen Zusammensetzung weisen die Primärpartikel des Mikrogels (B) bevorzugt einen durchschnittlichen Teilchendurchmesser von 5 bis 500 nm, bevorzugter von 20 bis 400 nm, bevorzugter von 20 bis 300 nm, bevorzugter von 20 bis 250 nm, noch bevorzugter 20 bis 99, noch bevorzugter 40 bis 80 nm auf (Durchmesserangaben nach DIN 53206). Die Herstellung besonders feinteiliger Mikrogele durch Emulsionspolymerisation erfolgt durch Steuerung der Reaktionsparameter in an sich bekannter Weise (s. z.B. H.G. Elias, Makromoleküle, Band 2, Technologie, 5. Auflage, 1992, Seite 99 ff).

Da sich die Morphologie der Mikrogele bei der Weiterverarbeitung der erfindungsgemäßen Zusammensetzung im wesentlichen nicht verändert, entspricht der durchschnittliche Teilchendurchmesser der dispergierten Primärpartikel im wesentlichen dem durchschnittlichen Teilchendurchmesser der dispergierten Primärpartikel, in den mit der erfindungsgemäßen Zusammensetzung erhaltenen Weiterverarbeitungsprodukten, wie Kunststoffen, Schmierstoffen, Beschichtungen kautschuken und thermoplastischen Elastomeren. Dies stellt einen besonderen Vorteil der erfindungsgemäßen Zusammensetzung dar. Den Abnehmern können gewissermaßen maßgeschneiderte flüssige, lagerstabile Mikrogelformulierungen zur Verfügung gestellt werden, die eine definierte Morphologie der Mikrogele aufweisen und die der Abnehmer leicht in den gewünschten Anwendungen weiterverarbeiten kann. Eine vorherige aufwändige Dispergierung, Homogenisierung oder gar Herstellung der Mikrogele ist nicht mehr erforderlich, weshalb zu erwarten ist, dass derartige Mikrogele auch Anwendung auf Gebieten finden werden, auf denen ihre Anwendung bisher als zu aufwändig erschien.

In der erfindungsgemäßen Zusammensetzung weisen die Mikrogele (B) zweckmäßig in Toluol bei 23°C unlösliche Anteile (Gelgehalt) von mindestens 70 Gew.-%, bevorzugter mindestens 80 Gew.-%, noch bevorzugter mindestens 90 Gew.-% auf.

Der in Toluol unlösliche Anteil wird dabei in Toluol bei 23° bestimmt. Hierbei werden 250 mg des Mikrogels in 20 ml Toluol 24 Stunden unter Schütteln bei 23°C gequollen. Nach Zentrifugation mit 20.000 Upm wird der unlösliche Anteil abgetrennt und getrocknet. Der Gelgehalt ergibt sich aus dem Quotienten des getrockneten Rückstands und der Einwaage und wird in Gewichtsprozent angegeben.

In der erfindungsgemäßen Zusammensetzung weisen die Mikrogele (B) zweckmäßig in Toluol bei 23°C einen Quellungsindex von weniger als 80, bevorzugter von weniger als 60 noch bevorzugter von weniger als 40 auf. So können die Quellungsindizes der Mikrogele (Qi) besonders bevorzugt zwischen 1 - 15 und 1-10 liegen. Der Quellungsindex wird aus dem Gewicht des in Toluol bei 23° für 24 Stunden gequollenen lösungsmittelhaltigen Mikrogels (nach Zentrifugation mit 20.000 Upm) und dem Gewicht des trockenen Mikrogels berechnet:

$$Qi = \text{Naßgewicht des Mikrogels / Trockengewicht des Mikrogels.}$$

Zur Ermittlung des Quellungsindex läßt man 250 mg des Mikrogels in 25 ml Toluol 24 h unter Schütteln quellen. Das Gel wird abzentrifugiert und gewogen und anschließend bei 70 °C bis zur Gewichtskonstanz getrocknet und nochmals gewogen.

In der erfindungsgemäßen Zusammensetzung weisen die Mikrogele (B) zweckmäßig Glastemperaturen Tg von -100°C bis +120°C, bevorzugter von -100°C bis +100°C, noch bevorzugter von -80°C bis +80 °C auf. In seltenen Fällen können auch Mikrogele verwendet werden, die aufgrund ihres hohen Vernetzungsgrades keine Glastemperatur aufweisen.

Weiterhin weisen die in der erfindungsgemäßen Zusammensetzung eingesetzten Mikrogele (B) bevorzugt eine Breite des Glasübergangs von größer als 5 °C, bevorzugt größer als 10°C, bevorzugter größer als 20 °C auf. Mikrogele, die eine solche Breite des Glasübergangs aufweisen, sind in der Regel - im Gegensatz zu vollständig homogen strahlenvernetzten Mikrogelen - nicht vollständig homogen vernetzt. Dies führt dazu, dass die Moduländerung von der Matrixphase zur dispergierten Phase in den aus den erfindungsgemäßen Zusammensetzungen beispielsweise hergestellten Mikrogel-enthaltenden Kunststoff-Zusammensetzungen nicht unmittelbar ist. Hierdurch kommt es bei schlagartiger Beanspruchung dieser Zusammensetzungen nicht zu Abreißeffekten zwischen Matrix und dispergierter Phase, wodurch die mechanischen Eigenschaften, das Quellverhalten und die Spannungsrisskorrosion vorteilhaft beeinflusst werden.

Die Bestimmung der Glasübergangstemperaturen (Tg) und der Breite des Glasübergangs (ΔTg) der Mikrogele erfolgt durch Differentialthermoanalyse (DTA, engl. Differential-Scanning-Calorimetry (DSC)) unter folgenden Bedingungen:

Für die Bestimmung von Tg und ΔTg werden zwei Abkühl-/Aufheizzyklen durchgeführt. Tg und ΔTg werden im zweiten Aufheizzyklus bestimmt. Für die Bestimmungen werden 10 - 12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20K/min auf +150°C aufgeheizt wird. Der zweite DSC-Zyklus wird durch sofortige Abkühlung der Probe begonnen, sobald eine Probentemperatur von +150°C erreicht ist. Die Abkühlung erfolgt mit einer Geschwindigkeit von ungefähr 320 K/min. Im zweiten Aufheizzyklus wird die Probe wie im ersten Zyklus noch einmal auf +150°C aufgeheizt. Die Aufheizgeschwindigkeit im zweiten Zyklus ist erneut 20K/min. Tg und ΔTg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC- Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs ΔTg erhält man aus der Differenz der beiden Temperaturen.

Die in der erfindungsgemäßen Zusammensetzung enthaltenen, bevorzugt nicht durch energiereiche Strahlen vernetzten Mikrogele können an sich in bekannter Weise hergestellt werden (s. zum Beispiel EP-A-405 216, EP-A-854171, DE-A 4220563, GB-PS 1078400, DE 197 01 489.5, DE 197 01 488.7, DE 198 34 804.5, DE 198 34 803.7, DE 198 34 802.9, DE 199 29 347.3, DE 199 39 865.8, DE 199 42 620.1, DE 199 42 614.7, DE 100 21 070.8, DE 100 38 488.9, DE 100 39 749.2, DE 100 52 287.4, DE 100 56 311.2 und DE 100 61 174.5). In den Patent(anmeldungen) EP-A 405 216, DE-A 4220563 sowie in GB-PS 1078400 wird die Verwendung von CR-, BR- und NBR-Mikrogelen in Mischungen mit doppelbindungshaltigen Kautschuken beansprucht. In DE 197 01 489.5 wird die Verwendung von nachträglich modifizierten Mikrogelen in Mischungen mit doppelbindungshaltigen Kautschuken wie NR, SBR und BR beschrieben.

Unter Mikrogelen werden zweckmäßig Kautschukpartikel verstanden, die insbesondere durch Vernetzung folgender Kautschuke erhalten werden:

| | |
|---|---|
| BR: | Polybutadien, |
| ABR: | Butadien/Acrylsäure-C1-4Alkylestercopolymere, |
| IR: | Polyisopren, |
| SBR: | Styrol-Butadien-Copolymerisate mit Styrolgehalten von 1-60, vorzugsweise 5-50 Gewichtsprozent, |
| X-SBR: | carboxylierte Styrol-Butadien-Copolymerisate |
| FKM: | Fluorkautschuk, |
| ACM: | Acrylatkautschuk, |
| NBR: | Polybutadien-Acrylnitril-Copolymerisate mit Acrylnitrilgehalten von 5-60, vorzugsweise 10-50 Gewichtsprozent, |
| X-NBR: | carboxlierte Nitrilkautschuke |

| | |
|---|---|
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichtsprozent, |
| CIIR: | chlorierte Isobutylen/Isopren-Copolymerisate mit Bromgehalten von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO und ECO: | Epichlorhydrinkautschuke, |
| Q: | Silikonkautschuke, mit Ausnahme von Silikon-Propfpolymerisaten, |
| AU: | Polyesterurethanpolymerisate, |
| EU: | Polyetherurethanpolymerisate |
| ENR: | Epoxydierter Naturkautschuk oder Mischungen davon. |

Die Herstellung der unvernetzten Mikrogel-Ausgangsprodukte erfolgt zweckmäßig durch folgende Methoden:

1.   Emulsionspolymerisation
2.   Lösungspolymerisation von Kautschuken, die über Variante 1 nicht zugänglich sind,
3.   Außerdem können natürlich vorkommende Latices wie z. B. Naturkautschuklatex eingesetzt werden.

In der erfindungsgemäßen Zusammensetzung sind die verwendeten Mikrogele (B) bevorzugt solche, die durch Emulsionspolymerisation und Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. Tetrafluorethylen, Vinylidenfluord, Hexafluorpropen, 2-Chlorbutadien, 2,3-Dichlorbutadien sowie doppelbindungshaltige Carbonsäuren wie z. B. Acrylsäure, Methacrylsäure, Maleinsäure, Itakonsäure , doppelbindungshaltige Hydroxyverbindungen wie z. B. Hydroxyethylmethacrylat, Hydroxyethylacrylat, Hydroxybutylmethacrylat, Aminfunktionalisierte (Meth)acrylate, Acrolein, N-Vinyl-2-pyrollidon, N-Allyl-Harnstoff und N-Allyl-Thioharnstoff sowie sekundäre Amino-(meth)-acrylsäureester wie 2-tert-Butylaminoethylmethacrylat und 2-tert-Butylaminoethylmethacrylamid etc. Die Vernetzung des Kautschukgels kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die direkte Vernetzung stellt eine bevorzugte Ausführungsform der Erfindung dar. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1 ,2-Polybutadien, N,N'-m-Phenylenmaleimid, 2,4-Toluylenbis(maleimid) und/ oder Triallyltrimellitat. Darüber hinaus kommen in Betracht die Acrylate und Methacrylate von mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluß an die Emulsionspolymerisation setzt man am besten die Latices ein, die bei der Emulsionspolymerisation erhalten werden. Prinzipiell kann diese Methode auch bei nichtwässrigen Polymerdispersionen angewandt werden, die auf andere Weise wie z. B. durch Umlösung zugänglich sind. Auch Naturkautschuklatices können auf diese Weise vernetzt werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Ditmethylhexan-2,5-dihydroperoxid, 2,5-Dimethylhexin-3,2,5-dihydroper-oxid, Dibenzoyl-peroxid, Bis-(2,4-dichlorobenzoyl)peroxid, t-Butylperbenzoat sowie organische Azoverbindungen, wie Azo-bis-isobutyronitril und Azo-bis-cyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C- Doppelbindung durch Hydrazin wie in US 5,302,696 oder US 5,442,009 beschrieben oder ggf. andere Hydrierungsmitteln, beispielsweise Organometallhydridkomplexe erfolgen.

Vor, während oder nach der Nachvernetzung kann ggf. eine Teilchenvergrößerung durch Agglomeration durchgeführt werden.

Bei dem erfindungsgemäß bevorzugt verwendeten Herstellungsverfahren ohne Anwendung energiereicher Strahlung werden stets nicht vollständig homogen vernetzte Mikrogele erhalten, die die oben beschriebenen Vorteile aufweisen können.

Auch Kautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungen aus.

Man stellt die gewünschten Größen der Mikrogele dadurch her, daß man die Kautschuklösung in einem flüssigen Medium, vorzugsweise in Wasser gegebenenfalls unter Zugabe geeigneter oberflächenaktiver Hilfsmittel wie z. B. Tensiden mittels geeigneter Aggregate mischt, so daß eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschriebenen, vor. Als Vernetzer eignen sich die zuvor genannten Verbindungen, wobei man das für die Herstellung der Dispersion eingesetzte Lösungsmittel gegebenenfalls vor der Vernetzung z. B. destillativ entfernen kann.

Als Mikrogele zur Herstellung der erfindungsgemäßen Zusammensetzung können sowohl nicht-modifizierte Mikrogele, die im wesentlichen keine reaktiven Gruppen insbesondere an der Oberfläche aufweisen als auch, modifizierte, mit funktionellen Gruppen, insbesondere an der Oberfläche modifizierte Mikrogele verwendet werden. Letztere können durch chemische Umsetzung der bereits vernetzten Mikrogele mit gegenüber C=C-Doppelbindungen reaktiven Chemikalien hergestellt werden. Diese reaktiven Chemikalien sind insbesondere solche Verbindungen, mit deren Hilfe polare Gruppen wie z. B. Aldehyd-, Hydroxyl-, Carboxyl-, Nitril- sowie schwefelhaltige Gruppen, wie z. B. Mercapto-, Dithiocarbamat-, Polysulfid-, Xanthogenat-, Thiobenzthiazol- und/oder Dithiophosphorsäuregruppen und/oder ungesättigte Dicarbonsäuregruppen an die Mikrogele chemisch gebunden werden können. Dies trifft auch auf N,N'-m-Phenylendiamin zu. Ziel der Mikrogelmodifizierung ist die Verbesserung der Mikrogelverträglichkeit, wenn die erfindungsgemäße Zusammensetzung zur Herstellung der späteren Matrix, in die das Mikrogel eingearbeitet ist, oder die erfindungsgemäße Zusammensetzung zur Einarbeitung in eine Matrix verwendet wird, um eine gute Verteilbarkeit bei der Herstellung sowie eine gute Ankopplung zu erreichen.

Besonders bevorzugte Methoden der Modifizierung sind die Pfropfung der Mikrogele mit funktionellen Monomeren sowie die Umsetzung mit niedermolekularen Agentien.

Für die Pfropfung der Mikrogele mit funktionellen Monomeren geht man zweckmäßigerweise von der wässrigen Mikrogeldispersion aus, die man mit polaren Monomeren wie Acrylsäure, Methacrylsäure, Itakonsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrollidon, N-Allyl-Harnstoff und N-Allyl-Thioharnstoff sowie sekundären Amino-(meth)-acrylsäureester wie 2-tert-Butylaminoethylmethacrylat und 2-tert-Butylaminoethylmethacrylamid unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, daß das im Modifikationsschritt verwendete Monomer möglichst quantitativ auf das unmodifizierte Mikrogel aufpfropft. Zweckmäßigerweise werden die funktionellen Monomere vor der vollständigen Vernetzung der Mikrogele hinzudosiert.

Prinzipiell denkbar ist auch eine Pfropfung der Mikrogele in nichtwässrigen Systemen, wobei auf diese Weise auch eine Modifikation mit Monomeren durch ionische Polymerisationsmethoden möglich wird.

Für eine Oberflächenmodifikation der Mikrogele mit niedermolekularen Agentien kommen insbesondere folgende Reagentien in Frage: elementarer Schwefel, Schwefelwasserstoff und/oder Alkylpolymercaptanen, wie 1,2-Dimercaptoethan oder 1,6-Dimercaptohexan, desweiteren Dialkyl- und Dialkylaryldithiocarbamat, wie den Alkalisalzen von Dimethyldithiocarbamat und/oder Dibenzyldithiocarbamat, ferner Alkyl- und Arylxanthogenaten, wie Kaliumethylxanthogenat und Natrium-isopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindung können Radikalstarter wie organische und anorganische Peroxide und/oder Azoinitiatoren, zugesetzt werden.

Auch eine Modifikation doppelbindungshaltiger Mikrogele wie z. B. durch Ozonolyse sowie durch Halogenierung mit Chlor, Brom und Jod kommen infrage. Auch eine weitere Umsetzung modifizierter Mikrogele wie z. B. die Herstellung hydroxylgruppenmodifizierter Mikrogele aus epoxydierten Mikrogelen wird als chemische Modifikation von Mikrogelen verstanden.

In einer bevorzugten Ausführungsform sind die Mikrogele durch HydroxylGruppen insbesondere auch an der Oberfläche davon modifiziert. Der Hydroxylgruppengehalt der Mikrogele wird durch Umsetzung mit Acetanydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gewichtsprozent, bezogen auf die Gesamtmenge an eingesetztem Kautschuk-Mikrogel, besonders bevorzugt sind 0,5-10 Gewichtsprozent bezogen auf Gesamtmenge an Kautschukgel.

Die Modifizierungsreaktionen können bei Temperaturen von 0-180 °C, bevorzugt 20-95 °C, ggf. unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Der mittlere Durchmesser der hergestellten Mikrogele kann mit hoher Genauigkeit beispielsweise auf 0,1 Mikrometer (100 nm) $\pm$ 0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele insbesondere im Bereich zwischen 5 bis 500 nm lassen sich mit gleicher Genauigkeit (mindestens Gew.-75 % aller Teilchen liegen um das Maximum der integrierten Korngrößenverteilungskurve (bestimmt durch Lichtstreuung) in einem Bereich von $\pm$ 10 % oberhalb und unterhalb des Maximums) herstellen und einsetzen. Dadurch kann die Morphologie der in der erfindungsgemäßen Zusammensetzung dispergierten Mikrogele praktisch "punktgenau" eingestellt und damit die Eigenschaften der erfindungsgemäßen Zusammensetzung sowie der daraus beispielsweise hergestellten Kunststoffe eingestellt werden.

Die Aufarbeitung der so hergestellten Mikrogele vorzugsweise auf Basis von BR, SBR, NBR, SNBR, oder Acrylnitril oder ABR kann beispielsweise durch Eindampfen, Koagulation, durch Cokoagulation mit einem weiteren Latexpolymer, durch Gefrierkoagulation (vgl. US-PS 2187146) oder durch Sprühtrocknung erfolgen. Bei der Aufarbeitung durch Sprühtrocknung können handelsübliche auch Fließhilfen wie beispielsweise $CaCO_3$ oder Kieselsäure zugesetzt werden.

In einer bevorzugten Ausführungsform der erfindungsgemäßen Zusammensetzung basiert das Mikrogel (B) auf Kautschuk.

In einer bevorzugten Ausführungsform der erfindungsgemäßen Zusammensetzung ist das Mikrogel (B) durch funktionelle, gegenüber C=C-Doppelbindungen reaktive Gruppen modifiziert.

In einer bevorzugten Ausführungsform weist das Mikrogel (B) einen Quellungsindex in Toluol bei 23 °C von 1 bis 15 auf.

Die erfindungsgemäße Zusammensetzung weist bevorzugt eine Viskosität von 2 mPas bis zu 50000000 mPas, bevorzugter 50 mPas bis zu 3000000 mPas bei einer Drehzahl von 5 s$^{-1}$, mit einem Kegelplattenviskosimeter nach DIN 53018 gemessen, bei 20°C auf.

Organisches nicht-vernetzbares Medium (A)

Die erfindungsgemäße Zusammensetzung kann ein oder mehrere organische Medien (A) enthalten, welche bei einer Temperatur von 120°C eine Viskosität von weniger als 30000 mPas, bevorzugter von weniger als 1000 mPas, bevorzugter von weniger als 200 mPas, bevorzugter von weniger als 100 mPas, noch bevorzugter weniger als 20 mPas bei 120°C aufweisen.

Ein solches Medium ist bei Raumtemperatur (20°C) flüssig bis fest, bevorzugt flüssig bzw. fließfähig.

Organisches Medium im Sinne der Erfindung bedeutet, dass das Medium mindestens ein Kohlenstoffatom enthält.

Unter nicht-vernetzbaren Medien im Sinne der Erfindung werden insbesondere solche Medien verstanden, die keine über Heteroatome-enthaltende funktionelle Gruppen oder C=C-Gruppen vernetzbare Gruppen enthalten, wie insbesondere übliche Monomere oder Prepolymere, die in üblicher Weise radikalisch, mit UV-Strahlen, thermisch und/oder durch Polyaddition bzw. Polykondensation unter Zusatz von Vernetzungsmitteln (z. B. Polyisocyanate, Polyamine, Säureanhydride) etc. unter Bildung von Oligomeren oder Polymeren in üblicher Weise vernetzt bzw. polymerisiert werden. Erfindungsgemäß können als organische, nicht-vernetzbare Medien auch solche Medien verwendet werden, die zwar beispielsweise gewisse Anteile an ungesättigten Bindungen (gewisse Polyesteröle, Rapsöl etc.) oder Hydroxygruppen (Polyether) enthalten, die jedoch nicht zu Oligomeren oder Polymeren in üblicher Weise vernetzt bzw. polymerisiert werden. Nicht-vernetzbaren Medien sind insbesondere auch Lösemittel, insbesondere solche nach DIN 55 945.

Bevorzugt handelt es sich um nicht-reaktive Lösemittel nach DIN 55 945, wie Hexan, Siedegrenzbenzine, Testbenzine, Xylol, Solvent Naphtha, Balsamterpentinöl, Methylethylketon, Methylisobutylketon, Methylamylketon, Isophoron, Butylacetat, 1-Methoxypropylacetat, Butylglykolacetat, Ethyldiglykolacetat und N-Methylpyrrolidon (Brock, Thomas, Groteklaes, Michael, Mischke, Peter, Lehrbuch der Lacktechnologie, Curt R. Vincentz Verlag Hannover, (1998) 93ff).

Besonders bevorzugte nicht-vernetzbare Medien schließen ein: Polyether, z. B. Baylube® 68CL, naphthenische Öle, z. B. Nynas® T 110, paraffinische, hochraffinierte Mineralöle, z. B. Shell Catenex® S 932, Esteröle, z. B. Methylester SU, Öle auf Basis nachwachsender Rohstoffe, z. B. raffiniertes Rüböl. Besonders bevorzugte nicht vernetzbare Medien (A) sind die große Klasse der Kohlenwasserstoffe, wie z.B. Poly-alpha-olefine, Hydrocracköle, Hydrotreated Öle etc., die Polyetheröle, und die Lösemittel nach DIN 55 945.

In einer bevorzugten Ausführungsform enthält die erfindungsgemäße Zusammensetzung die Komponente (A) nicht.

In einer weiteren bevorzugten Ausführungsform besteht die erfindungsgemäße Zusammensetzung nur aus den Komponente (B) und (C).

Funktionale Additive (C)

Funktionale Additive (C) im Sinne der vorliegende Anmeldung sind sämtliche Stoffe, die anderen Stoffen oder Stoffgemischen in kleinen Mengen zugesetzt werden, um deren Eigenschaften in gewünschter Weise zu verändern oder deren Verarbeitbarkeit zu erleichtern. Dabei handelt es sich insbesondere aber nicht ausschließlich um organische Verbindungen, die funktionelle Gruppen aufweisen.

Bevorzugt ist das funktionale Additiv (C) mindestens eine Verbindung, die mindestens ein, bevorzugter mindestens zwei Heteroatome enthält, die aus der Gruppe ausgewählt wird, die aus Schwefel, Phosphor, Stickstoff, Halogenen und Sauerstoff besteht.

Das funktionale Additiv (C) ist bevorzugt eine Verbindung, die aus der Gruppe ausgewählt wird, die besteht aus: als Hochdruck-Additive geeignete Verbindungen, wie organische Polysulfide auf Basis geschwefelter Olefine, organische Polysulfide auf Basis geschwefelter Triglyceride, Fettsäureester, Fettalkohole etc., organische Polysulfide auf Basis geschwefelter Öle; andere schwefelhaltige Verbindungen, wie Xanthogenate, Thioharnstoffderivate etc.; organische Chlorverbindungen wie z.B. Chlorparaffine etc.; organische Stickstoffverbindungen, wie z.B. Ester der Carbaminsäure etc.; als Verschleißschutzaddtive geeignete Verbindungen, wie phosphorhaltige Komponenten, wie z.B. Phosphorsäureester, Phosphonate, Alkyl-Arylphosphine, Phosphite etc.; Phosphor- und schwefelhaltige Derivate wie z.B. Metalldialkyldithiophosphate, Diaryl- und Dialkyldithiophosphate, Monoalkyl- und Monoaryldithiophosphate etc.; Phosphor- und stickstoffhaltige Verbindungen wie z.B. aminneutralisierte Phosphorsäure-Derivate etc.; Phosphor- und chlorhaltige Verbindungen, wie. z.B. chlorhaltige Phosphorverbindungen; als Korrosionsschutzadditive geeignete Verbindungen, wie neutralisierte Alkali- und Erdalkalisalze von Sulfonsäuren und deren Derivate wie z.B. Estern etc.; neutralisierte Mono- und Dicarbonsäuren wie z.B. Naphthensäure, Salicylsäure etc. und deren Derivate wie z.B. Alkali- und Erdalkalisalze, Ester, Amide etc.; Fettöl- und Fettsäurederivate; als Buntmetallinhibitoren geeignete Verbindungen wie Triazol-Derivate, wie z.B., Benztriazol, Thiadiazol-Derivate wie z.B. Dimercaptothiadiazole etc.; als Antioxidantien geeignete Verbindungen, wie Alkyl-/aryl-substituierte Phenol-Derivate, Alkyl-Aryl-substituierte Amin-Derivate; Andere P- bzw. S-haltige Phenol-/Amin-Derivate; als Reibungsmodifzierer geeignete Verbindungen, wie Metall-haltige organische Verbindungen wie z.B. Molybdän-, Antimon-, Dithiocarbamate bzw. -Dithiophosphate etc.; Fettsäure- bzw. Fettalkohol-Derivate wie z.B. Fettsäureamide, Polyolester, Phthalate, Sebacate, Benzoate, Adipate etc.; als oberflächenaktive Substanzen geeignete Verbindungen, wie Detergentien wie z.B. Alkyl-/Arylfettsäure-Derivate, Alkyl-/Aryl-Sulfonsäure-Derivate, Alkylphenol-Derivate, etc.; als Dispersant geeignete Verbindungen wie z.B. Veresterungsprodukte von Dicarbonsäuren und Glykolen etc.; des weiteren Pourpoint-Depressants, VI-Verbesserer, Entschäumer, Entlüfter, Verlaufhilfsmittel, Klebrigmacher etc.; als Katalysatoren geeignete Verbindungen wie z.B. Beschleuniger wie z.B. Mercaptobenzothiadiazal-Derivate etc., als Vernetzer geeignete Verbindungen, wie z.B. Harnstoff-, Triazin-, Carbaminsäure-Derivate etc.

Besonders bevorzugt sind folgende Verbindungen als Komponente (C): als Hochdruck-Additive geeignete Verbindungen, wie organische Polysulfide auf Basis geschwefelter Olefine, organische Polysulfide auf Basis geschwefelter Triglyceride, Fettsäureester, Fettalkohole etc., organische Polysulfide auf Basis geschwefelter Öle; organische Chlorverbindungen wie z.B. Chlorparaffine etc.; organische Stickstoffverbindungen, wie z.B. Ester der Carbaminsäure etc.; als Verschleißschutzadditive geeignete Verbindungen, wie phosphorhaltige Komponenten, wie z.B. Phosphonate, Phosphite etc.; Phosphor- und schwefelhaltige Derivate wie z.B. Metalldialkyldithiophosphate, Diaryl- und Dialkyldithiophosphate, etc.; Phosphor- und stickstoffhaltige Verbindungen wie z.B. aminneutralisierte Phosphorsäure-Derivate etc.; als Korrosionsschutzadditive geeignete Verbindungen, wie neutralisierte Alkali- und Erdalkalisalze von Sulfonsäuren und deren Derivate wie z.B. Estern etc.; neutralisierte Mono- und Dicarbonsäuren wie z.B. Naphthensäure, Salicylsäure etc. und deren Derivate wie z.B. Alkali- und Erdalkalisalze, Ester, Amide etc.; Fettöl- und Fettsäurederivate; als Buntmetallinhibitoren geeignete Verbindungen wie Triazol-Derivate, wie z.B., Benztriazol, Thiadiazol-Derivate wie z.B. Dimercaptothiadiazole etc.; als Antioxidantien geeignete Verbindungen, wie Alkyl-/aryl-substituierte Phenol-Derivate, Alkyl-Aryl-substituierte Amin-Derivate; als Reibungsmodifzierer geeignete Verbindungen, wie Metall-haltige organische Verbindungen wie z.B. Molybdän-, Antimon-, Dithiocarbamate bzw. -Dithiophosphate etc.; Fettsäure- bzw. Fettalkohol-Derivate wie z.B. Fettsäureamide, , Phthalate, Sebacate, Adipate etc.; als oberflächenaktive Substanzen geeignete Verbindungen, wie Detergentien wie z.B.Alkyl-/Aryl-Sulfonsäure-Derivate, Alkylphenol-Derivate, etc.; als Dispersant geeignete Verbindungen wie z.B. Veresterungsprodukte von Dicarbonsäuren und Glykolen etc.; des weiteren Entschäumer, Entlüfter, Verlaufhilfsmittel, Klebrigmacher etc.; als Katalysatoren geeignete Verbindungen wie z.B. Beschleuniger wie z.B. Mercaptobenzothiadiazal-Derivate etc., als Vernetzer geeignete Verbindungen, wie z.B. Carbaminsäure-Derivate etc.

Das funktionale Additiv (C) weist bevorzugt bei einer Temperatur von 120°C eine Viskosität von weniger als 1000 mPas auf. Es ist insbesondere bevorzugt bei Raumtemperatur flüssig bzw. fließfähig.

Die erfindungsgemäße Zusammensetzung enthält bevorzugt 0,5 bis 99,9 Gew.-%, bevorzugter 10 bis 90 Gew.-%, noch bevorzugter 20 bis 70 Gew.-%, des Mikrogels (B), bezogen auf die Gesamtmenge der Zusammensetzung, wobei die genannten Unter- und Obergrenzen jeweils auch unabhängig voneinander vorliegen können.

Die erfindungsgemäße Zusammensetzung enthält weiterhin bevorzugt 0,1 bis 99,5 Gew.-%, bevorzugter 10 bis 90 Gew.-%, bevorzugter 30 bis 80 Gew.-%, bevorzugter 40 bis 97 Gew.-%, noch bevorzugter 50 bis 95 Gew.-%, weiterhin bevorzugter 60 bis 90 Gew.-% des funktionalen Additivs (C), wobei die genannten Unter- und Obergrenzen jeweils auch unabhängig voneinander vorliegen können.

Die erfindungsgemäße Zusammensetzung besteht bevorzugt aus dem Mikrogel (B) und dem funktionalen Additiv. Insbesondere ist die Anwesenheit von Wasser nicht bevorzugt. Bevorzugt enthalten die erfindungsgemäßen Zusammensetzungen weniger als 0,8 Gew.-%, noch bevorzugter weniger als 0,5 Gew.-% Wasser. Am meisten bevorzugt ist die Anwesenheit von Wasser ausgeschlossen (< 0,1 Gew.-%).

Die erfindungsgemäße Zusammensetzung kann ein, zwei, drei oder mehrere der funktionalen Additive enthalten. So sind erfindungsgemäß insbesondere sogenannte Additiv-Pakete, die mehr als ein funktionales Additiv gebunden bzw. aufgenommen von dem Mikrogel (B) enthalten bevorzugt.

Die erfindungsgemäße Zusammensetzung kann auch Pigmente und Füllstoffe enthalten, wie anorganische und organische Pigmente, silikatische Füllstoffe wie Kaolin, Talkum, Carbonate wie Calciumcarbonat und Dolomit, Bariumsulfat, Metalloxide, wie Zinkoxid, Calciumoxid, Magnesiumoxid, Aluminiumoxid, hochdisperse Kieselsäuren (gefällte und thermisch hergestellte Kieselsäuren), Metallhydroxide, wie Aluminiumhydroxid und Magnesiumhydroxid, Glasfasern und Glasfaserprodukte (Latten, Stränge oder Mikroglaskugeln), Kohlenstofffasern, Thermoplastfasern (Polyamid, Polyester, Aramid), Kautschukgele auf Basis Polychloropren und/oder Polybutadien oder auch aller anderer vorher beschriebener Gelpartikel, die einen hohen Vernetzungsgrad besitzen und Teilchengröße 5 bis 1000 nm.

Die genannten Füllstoffe können alleine oder im Gemisch eingesetzt werden. In einer bevorzugten Ausführungsform wird die erfindungsgemäße Zusammensetzung durch Mischen von mindestens einem funktionalen Additiv (C), insbesondere eines, welches bei einer Temperatur von 120°C eine Viskosität von weniger als 30000 mPas aufweist, und mindestens einem trockenen Mikrogelpulver (B) (bevorzugt weniger als 1 Gew.-%, noch bevorzugter weniger als 0,5 Gew.-% flüchtige Anteile (beim Mischen der Komponente (A) und (B) werden keine Mikrogel-Latices verwendet)), mittels eines Homogenisators, einer Perlmühle, einer Dreiwalze, einer Ein- oder Mehrwellen-Extruderschnecke, eines Kneters und/ oder eines Dissolvers, bevorzugt mittels eines Homogenisators, einer Perlmühle oder einer Dreiwalze hergestellt.

Hinsichtlich der Viskosität der herzustellenden Zusammensetzung ist der Kneter, im welchem bevorzugt nur sehr hochviskose (fast feste bis feste) Zusammensetzungen eingesetzt werden können, am eingeschränktesten, d. h. er ist nur in Sonderfällen anwendbar.

Nachteilig an der Perlmühle ist der vergleichsweise eingeschränkte Viskositätsbereich (tendenziell dünne Zusammensetzungen), hohe Reinigungsaufwand, teure Produktwechsel der verwendbaren Zusammensetzungen sowie der Abrieb von Kugeln und Mahlapparatur.

Besonders bevorzugt erfolgt die Homogenisierung der erfindungsgemäßen Zusammensetzungen mittels eines Homogenisators oder einer Dreiwalze. Nachteilig an der Dreiwalze ist der vergleichsweise eingeschränkte Viskositätsbereich (tendenziell sehr dicke Zusammensetzungen), geringer Durchsatz und die nicht geschlossene Arbeitsweise (schlechter Arbeitsschutz). Sehr bevorzugt erfolgt die Homogenisierung der erfindungsgemäßen Zusammensetzungen daher mittels eines Homogenisators. Der Homogenisator erlaubt es dünne und dicke Zusammensetzungen bei hohem Durchsatz zu verarbeiten (hohe Flexibilität). Produktwechsel sind vergleichsweise schnell und problemlos möglich.

Überraschend und neu ist, dass die Mikrogele (B) in flüssigen Additiven dispergiert werden können; insbesonders überraschend ist die bis zu den Primärpartikeln gelungene Dispergierung.

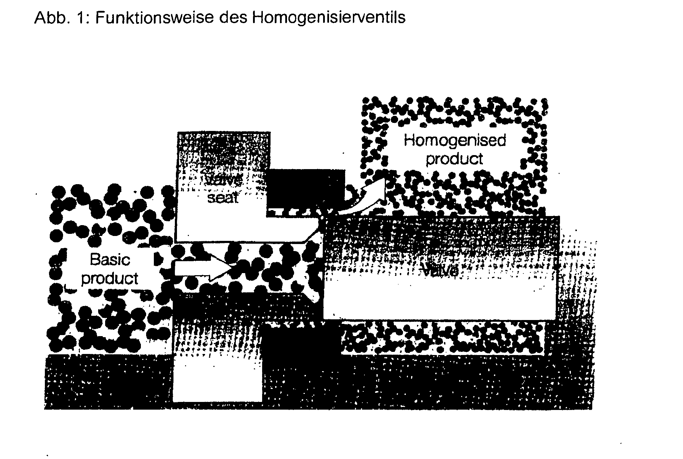

Die Dispergierung der Mikrogele (B) in flüssigen Additiven (C) erfolgt im Homogenisator im Homogenisierventil (s. Abb. 1).

Bei dem erfindungsgemäß bevorzugt eingesetzten Verfahren werden Agglomerate in Aggregate und/oder Primärpartikel zerteilt. Agglomerate sind physikalisch trennbare Einheiten, bei deren Dispergierung keine Änderung der Primärpartikelgröße erfolgt.

Abb. 1 zeigt die Funktionsweise des Homogenisierventils.

(Darin bedeuten:

Basic product: Ausgangsprodukt,
Valve seat: Ventilsitz
Valve: Ventil
Homogenised product: Homogenisiertes Produkt).

Das zu homogenisierende Produkt tritt in das Homogenisierventil mit langsamer Geschwindigkeit ein und wird im Homogenisierspalt auf hohe Geschwindigkeiten beschleunigt. Die Dispergierung erfolgt hinter dem Spalt hauptsächlich aufgrund von Turbulenzen und Kavitation (William D. Pandolfe, Peder Baekgaard, Marketing Bulletin der Fa. APV Homogeniser Group - "Highpressure homogenisers processes, product and applications").

Die Temperatur der erfindungsgemäßen Zusammensetzung beträgt bei Aufgabe in den Homogenisator zweckmäßig -40 - 140°C, vorzugsweise 20 - 80 °C.

Die zu homogenisierende erfindungsgemäßen Zusammensetzung wird zweckmäßig bei einem Druck von 20 bis 4000 bar, bevorzugt 100 bis 4000 bar, bevorzugt 200 bis 4000 bar, bevorzugt 200 - 2000 bar, sehr bevorzugt 500 - 1500 bar im Gerät homogenisiert. Die Anzahl der Durchläufe richtet sich nach der Güte gewünschten Dispergiergüte und kann zwischen einem und 20, bevorzugt einem bis 10, bevorzugter einem bis vier Durchgängen variieren.

Die erfindungsgemäß hergestellten Zusammensetzungen besitzen eine besonders feine Partikelverteilung, die besonders mit dem Homogenisator erreicht wird, der auch hinsichtlich der Flexibilität des Verfahrens bezüglich variierender Viskositäten flüssiger Additive und der resultierenden Zusammensetzungen und notwendigen Temperaturen sowie der Dispergiergüte äußerst vorteilhaft ist.

Die Erfindung betrifft weiterhin die Verwendung der erfindungsgemäßen Zusammensetzung zur Herstellung von Mikrogel-enthaltenden Polymeren bzw. Kunststoffen.

Die Erfindung wird mit Blick auf die folgenden Beispiele näher erläutert. Die Erfindung ist selbstverständlich nicht auf diese Beispiele beschränkt.

**Beispiel**

Folgende erfindungsgemäße Additiv-Mikrogel-Kombinationen wurden hergestellt und anschließend in ein Schmieröl eingearbeitet.

Es wurde eine Kombination aus Additiv und Mikrogel in Mineralöl sowohl gegen das reine Mineralöl als auch gegen Mischungen des einzelnen Additivs in Mineralöl bzw. des Mikrogels in Mineralöl geprüft. Dem Mikrogel war ein der Stabilisierung dienendes Dispersant zugesetzt.
Geprüft wurde hierbei auf typische Kenngrößen des Belastungs- und Verschleißverhaltens von Schmierstoffen nach DIN 51350 im sogenannten Vierkugelapparat. Die Beschreibung des Messapparates sowie der hier durchgeführten Prüfungen kann DIN 51350, T.1 - T.3 entnommen werden. Gemäß DIN 51350, T.2 wurde die Belastungsgrenze bis zum Verschweißen - die hier genannte Schweißlast - in N ermittelt.
Gemäß DIN 51350, T.3 wurde die Verschleißkenngröße - der sogenannte Kalottendurchmesser- in mm ermittelt.

Resultat:

Während die Additiv-Mineralöl-Kombination eine Verbesserung der Schweißlast gegenüber dem Mineralöl erzielt, ohne den Kalottendurchmesser signifikant zu beeinflussen, erzielt man mit der Mikrogel/stabilisierenden Dispersant-Kombination eine deutliche Verbesserung des Kalottendurchmessers gegenüber dem Mineralöl, ohne die Schweißlast signifikant heraufzusetzen.
In der Kombination Additiv-Mikrogel/stabilisierendes Dispersant-Mineralöl gelingt es letztlich, beide Größen gegenüber dem Mineralöl signifikant zu verbessern, d.h. die Schweißlast zu erhöhen und den Kalottendurchmesser zu erniedrigen.

| | Mischung 1 | Basismedium | Mischung 2 | Mischung 3 |
|---|---|---|---|---|
| <u>Zusammensetzung</u> | 2 % Additiv 0,66 % Mikrogel/1 % Dispersant 96,37 % Mineralöl | Mineralöl pur | 2 % Additiv 98 % Mineralöl | 0,66 % Mikrogel 1 % Dispersant 98,37 % Mineralöl |
| VKA-Schweißlast[DIN 51350, T2] | 4600 N | 800 N | 3000 N | 1400 N |
| VKA-Kalotte [DIN 51350, T3] 1 h /1500 rpm/300 N | 0,63 mm | 0,68 mm | 0,70 mm | 0,50 mm |

Diskussion:

Die Versuche belegen eine synergistische Wirkung der verwendeten Mikrogel-Additiv-Kombination. Vermutlich gelingt es, durch Zusatz des Mikrogels das Additiv teilweise oberflächlich, teilweise durch Eindiffundieren in einer Art Oberstruktur zu binden. Einerseits scheint das Additiv in Mischungen entweder durch homogenere Einarbeitung oder durch langsame Abgabe während der Messung gezielter wirken zu können.

Die erfindungsgemäßen Additiv-Mikrogel-Kombinationen sind insbesondere in Schmierstoffen wie vor allem Fetten, Pasten, aber auch Lösungen geeignet, durch gezielte Additivabgabe eine effizientere Wirkung beispielsweise eines Schmierstoffes zu erzielen. Die Kombinationen bestechen durch eine deutlich einfachere Handhabung der Fett/ Pasten gegenüber den einzelnen Komponenten flüssiges Additiv bzw. pulverförmiges Mikrogel. Insbesondere bei Schmierfetten sind solche Kombinationen geeignet, den ansonsten vorhandenen Konsistenzverlust in Fetten bei Zugabe flüssiger Additive zu vermeiden.

## Patentansprüche

1. Zusammensetzung, enthaltend mindestens ein Mikrogel (B) sowie mindestens ein funktionales Additiv (C) und mindestens ein nicht vernetzbares organisches Medium (A).

2. Zusammensetzung nach Anspruch 1, **dadurch gekennzeichnet, dass** sie Pigmente und/ oder Füllstoffe enthält.

3. Zusammensetzung, bestehend aus einem Mikrogel (B) und mindestens einem funktionalen Additiv (C).

4. Zusammensetzung nach einem der Ansprüche 1 bis 3, **dadurch gekennzeichnet, dass** die Primärpartikel des Mikrogels (B) eine annähernd kugelförmige Geometrie aufweisen.

5. Zusammensetzung nach einem der Ansprüche 1 bis 4, **dadurch gekennzeichnet, dass** die Abweichung der Durchmesser eines einzelnen Primärpartikels des Mikrogels (B), definiert als

$$[(d1 - d2) / d2] \times 100,$$

worin d1 und d2 zwei beliebige Durchmesser des Primärpartikels sind und d1 > d2 ist, weniger als 250 % beträgt.

6. Zusammensetzung noch Anspruch 5, worin die genannte Abweichung weniger als 50 % beträgt.

7. Zusammensetzung nach einem der Ansprüche 1 bis 6, **dadurch gekennzeichnet, dass** die Primärpartikel des Mikrogels (B) eine durchschnittliche Teilchengröße von 5 bis 500 nm aufweisen.

8. Zusammensetzung nach einem der Ansprüche 1 bis 7, **dadurch gekennzeichnet, dass** die Primärpartikel des Mikrogels (B) eine durchschnittliche Teilchengröße von weniger als 99 nm aufweisen.

9. Zusammensetzung nach einem der Ansprüche 1 bis 8, **dadurch gekennzeichnet, dass** die Mikrogele (B) in Toluol bei 23 °C unlösliche Anteile von mindestens 70 Gew.-% aufweisen.

10. Zusammensetzung nach einem der Ansprüche 1 bis 9, **dadurch gekennzeichnet, dass** die Mikrogele (B) in Toluol bei 23 °C einen Quellungsindex von weniger als 80 aufweisen.

11. Zusammensetzung nach einem der Ansprüche 1 bis 10, **dadurch gekennzeichnet, dass** die Mikrogele (B) Glastemperaturen von -100 °C bis + 1 20 °C aufweisen.

12. Zusammensetzung nach einem der Ansprüche 1 bis 11, **dadurch gekennzeichnet, dass** das Mikrogel (B) ein vernetztes Mikrogel ist, dass nicht durch energiereiche Strahlung vernetzt Ist.

13. Zusammensetzung nach einem der Ansprüche 1 bis 12, **dadurch gekennzeichnet, dass** die Mikrogele (B) eine Breite des Glasübergangsbereichs von größer als 5 °C aufweisen.

14. Zusammensetzung nach einem der Ansprüche 1 bis 13, **dadurch gekennzeichnet, dass** die Mikrogele (B) durch Emulsionspolymerlsation erhältlich sind.

15. Zusammensetzung nach einem der Ansprüche 1 bis 14, **dadurch gekennzeichnet, dass** das Mikrogel (B) auf Kautschuk basiert.

16. Zusammensetzung nach einem der Ansprüche 1 bis 15, **dadurch gekennzeichnet, dass** das Mikrogel (B) auf Homopolymeren oder statistischen Copolymeren basiert.

17. Zusammensetzung nach einem der Ansprüche 1 bis 16, **dadurch gekennzeichnet, dass** das Mikrogel (B) durch funktionelle, gegenüber C=C-Doppelbindungen reaktive Gruppen modifiziert ist.

18. Zusammensetzung nach einem der Ansprüche 1 bis 17, worin das funktionale Additiv (C) mindestens eine Verbindung ist, die mindestens ein Heteroatom enthält, das aus der Gruppe ausgewählt wird, die aus Schwefei, Phosphor, Stickstoff, Halogenen, Sauerstoff und Metallen besteht.

19. Zusammensetzung nach einem der Ansprüche 1 bis 18, worin das funktionale Additiv (C) mindestens eine Verbindung ist, die mindestens zwei Heteroatbme enthält, die aus der Gruppe ausgewählt werden, die aus Schwefel, Phosphor, Stickstoff, Halogenen, Sauerstoff und Metalle besteht.

20. Zusammensetzung nach einem der Ansprüche 1 bis 19, worin das funktionale Additiv (C) mindestens eine Verbindung ist, die aus der Gruppe ausgewählt wird, die besteht aus: als Hochdruck-Additive geeignete Verbindungen; als Verschleißschutzadditive geeignete Verbindungen, als Korrosionsschutzadditive geeignete Verbindungen; als Buntmetallinhibitoren geeignete Verbindungen; als Antioxidantien geeignete Verbindungen; als Reibungsmodifzierer geeignete Verbindungen; als oberflächenaktive Substanzen geeignete Verbindungen; als Dispersant geeignete Verbindungen; Pourpoint-Depressants, VI-Verbesserer, Entschäumer, Entlüfter, Verlaufhilfsmittel, Klebrigmacher; als Katalysatoren geeignete Verbindungen, und als Vernetzer geeignete Verbindungen.

21. Zusammensetzung nach Anspruch 20, worin die als Hochdruck-Additive geeigneten Verbindungen organische Polysulfide auf Basis geschwefelter Olefine; organische Polysulfide auf Basis geschwefelter Triglyceride, Fettsäureester, oder Fettalkohole; organische Polysulfide auf Basis geschwefelter Öle; andere schwefelhaltige Verbindungen; organische Chlorverbindungen; oder organische Stickstoffverbindungen sind.

22. Zusammensetzung nach Anspruch 20, worin die als Verschleißschutzadditive geeigneten Verbindungen phosphorhaltige Komponenten; Phosphor- und schwefelhaltige Derivate; Phosphor-und stickstoffhaltlge Verbindungen; oder Phosphor- und chlorhaltige Verbindungen sind.

23. Zusammensetzung nach Anspruch 20, worin die als Korrosionsschutzadditive geeigneten Verbindungen neutrallsierte Alkali- und Erdalkalisalze von Sulfonsäuren und deren Derivate; neutralisierte Mono- und Dicarbonsäuren und deren Derivate; oder Fettöl- und Fettsäurederivate sind.

24. Zusammensetzung nach Anspruch 20, worin die als Buntmetallinhibitoren geeignete Verbindungen Triazol-Derivate oder Thiadiazol-Derivate sind.

25. Zusammensetzung nach Anspruch 20, worin die als Antioxidantien geeigneten Verbindungen Alkyl-/Aryl-substituierte Phenol-Derlvate, Alkyl-Aryl-substituierte Amin-Derivate; oder andere P- bzw. S-haltige Phenol-/Amin-Derivate sind.

26. Zusammensetzung nach Anspruch 20, worin die als Reibungsmodifzierer geeigneten Verbindungen Metall-haltige organische Verbindungen oder Fettsäure- bzw. Fettalkohol-Derivate sind.

27. Zusammensetzung nach Anspruch 20, worin die als oberflächenaktive Substanzen geeigneten Verbindungen Detergentien sind.

28. Zusammensetzung nach Anspruch 20, worin die als Dispersant geeigneten Verbindungen Veresterungsprodukte von Dicarbonsäuren und Glykolen sind.

29. Zusammensetzung nach Anspruch 21, worin die als Katalysator geeigneten Verbindungen Beschleuniger sind.

**30.** Zusammensetzung nach Anspruch 22, worin die als Vernetzer geeigneten Verbindungen Harnstoff-, Triazin-, oder Carbaminsäure-Derivate sind.

**31.** Zusammensetzung nach einem der Ansprüche 1 bis 30, worin das funktionale Additiv bei einer Temperatur von 120 °C eine Viskosität von weniger als 1000 mPas aufweist.

**32.** Zusammensetzung nach einem der Ansprüche 1 bis 31, die 10 bis 90 Gew.-% des Mikrogels (B), bezogen auf die Gesamtmenge der Zusammensetzung enthält.

**33.** Zusammensetzung nach einem der Ansprüche 1 bis 31 , die 10 bis 90 Gew.-% des funktionalen Additivs (C) enthält.

**34.** Zusammensetzung nach einem der Ansprüche 1 bis 33, **dadurch gekennzeichnet, dass** sie durch Mischen des funktionalen Additives (C) und des Mikrogels (B) sowie gegebenenfalls des nichtvernetzbaren organischen Mediums (A) mittels eines Homogenisators, einer Perlmühle (Rührwerkskugelmühle), einer Dreiwalze, einer Ein-oder Mehrwellen-Extruderschnecke, eines Kneters, eines Uitra-Turrax-Gerätes und/oder eines Dissolvers hergestellt worden ist.

**35.** Zusammensetzung nach Anspruch 34, **dadurch gekennzeichnet, dass** sie mittels eines. Homogenisators, einer Perlmühle (Rührwerkskugelmühle), einer Dreiwalze oder eines Dissolvers hergestellt worden ist.

**36.** Zusammensetzung nach einem der Ansprüche 1 bis 35, **dadurch gekennzeichnet, dass** sie eine Viskosität von 2 mPas bis zu 50.000.000 mPas bei einer Drehzahl von 5 s$^{-1}$ , bestimmt mit einem Kegel-Platte-Messsystem nach DIN 53018 bei 20 °C aufweist.

**37.** Zusammensetzung nach einem der Ansprüche 1 bis 36, **dadurch gekennzeichnet, dass** das Mikrogel (B) einen Quellungsindex in Toluol bei 23 ° C von 1 bis 15 besitzt.

**38.** Zusammensetzung nach einem der Ansprüche 1 bis 37, **dadurch gekennzeichnet, dass** die Mikrogele (B) In Toluol bei 23 °C unlösliche Anteile von mindestens 95 Gew.-% aufweisen.

**39.** Zusammensetzung nach einem der Ansprüche 1 bis 38, **dadurch gekennzeichnet, dass** das Mikrogel nicht mit Hydroxylgruppen modifiziert ist.

**40.** Zusammensetzung nach einem der Ansprüche 1 bis 39, **dadurch gekennzeichnet, dass** das Mikrogel nicht modifiziert ist.

**41.** Verwendung der Zusammensetzung nach einem der Ansprüche 1 bis 40 zur Einarbeitung In thermoplastische Kunststoffe, Kautschuke oder thermoplastische Elastomere.

**42.** Verwendung der Zusammensetzung nach einem der Ansprüche 1 bis 30 zur Herstellung von Mikrogel-enthaltenden Polymeren.

**43.** Verwendung nach Anspruch 42 zur Herstellung von Mikrogel-enthaltenden Kautschuken.

**44.** Verwendung nach Anspruch 42 zur Herstellung von Mikrogel-enthaltenden thermoplastischen Elastomeren.

**45.** Verwendung der Zusammensetzungen nach einem der Ansprüche 1 bis 40 zur Herstellung von Schmierstoffen, Formkörpern oder Beschichtungen.

**46.** Verwendung nach Anspruch 45 zur Herstellung von Schmierfetten oder modifizierten Schmierölen.

**47.** Verwendung der Zusammensetzungen nach einem der Ansprüche 1 bis 40 als Additiv für Kunststoffe, Kautschuke, Beschichtungsmittel oder Schmiermittel.

**48.** Kunststoffe, Kautschuke, thermoplastische Elastomere, Beschichtungsmittel oder Schmiermittel, enthaltend die Zusammensetzungen nach Anspruch 1 oder einem davon abhängigen Anspruch.

**49.** Kunststoffe, thermoplastische Elastomere, Beschichtungsmittel oder Schmiermittel, enthaltend die Zusammensetzungen nach Anspruch 3 oder einem davon abhängigen Anspruch.

**Claims**

1. Composition comprising at least one microgel (B) and at least one functional additive (C) and at least one non-crosslinkable organic medium (A).

2. Composition according to Claim 1, **characterized in that** it comprises pigments and/or fillers.

3. Composition consisting of a microgel (B) and at least one functional additive (C).

4. Composition according to any one of Claims 1 to 3, **characterized in that** the primary particles of the microgel (B) have an approximately spherical geometry.

5. Composition according to any one of Claims 1 to 4, **characterized in that** the deviation of the diameter of an individual primary particle of the microgel (B), defined as

$$[(d1 - d2)/d2] \times 100,$$

in which d1 and d2 are any two diameters of the primary particle and d1 > d2, is less than 250%.

6. Composition according to Claim 5, in which said deviation is less than 50%.

7. Composition according to any one of Claims 1 to 6, **characterized in that** the primary particles of the microgel (B) have an average particle size of 5 to 500 nm.

8. Composition according to any one of Claims 1 to 7, **characterized in that** the primary particles of the microgel (B) have an average particle size of less than 99 nm.

9. Composition according to any one of Claims 1 to 8, **characterized in that** the microgels (B) have a level of insolubles in toluene at 23°C of at least 70% by weight.

10. Composition according to any one of Claims 1 to 9, **characterized in that** the microgels (B) have a swelling index of less than 80 in toluene at 23°C.

11. Composition according to any one of Claims 1 to 10, **characterized in that** the microgels (B) have glass transition temperatures of -100°C to +120°C.

12. Composition according to any one of Claims 1 to 11, **characterized in that** the microgel (B) is a crosslinked microgel which has not been crosslinked by high-energy radiation.

13. Composition according to any one of Claims 1 to 12, **characterized in that** the microgels (B) have a width of the glass transition range of greater than 5°C.

14. Composition according to any one of Claims 1 to 13, **characterized in that** the microgels (B) are obtainable by emulsion polymerization.

15. Composition according to any one of Claims 1 to 14, **characterized in that** the microgel (B) is based on rubber.

16. Composition according to any one of Claims 1 to 15, **characterized in that** the microgel (B) is based on homopolymers or random copolymers.

17. Composition according to any one of Claims 1 to 16, **characterized in that** the microgel (B) has been modified by means of functional groups reactive toward C=C double bonds.

18. Composition according to any one of Claims 1 to 17, in which the functional additive (C) is at least one compound which contains at least one heteroatom selected from the group consisting of sulphur, phosphorus, nitrogen, halogens, oxygen and metals.

19. Composition according to any one of Claims 1 to 18, in which the functional additive (C) is at least one compound which contains at least two heteroatoms selected from the group consisting of sulphur, phosphorous, nitrogen, halogens, oxygen and metals.

20. Composition according to any one of Claims 1 to 19, in which the functional additive (C) is at least one compound selected from the group consisting of: compounds suitable as high-pressure additives; compounds suitable as antiwear additives, compounds suitable as anticorrosion additives; compounds suitable as nonferrous metal inhibitors; compounds suitable as antioxidants; compounds suitable as friction modifiers; compounds suitable as surfactants; compounds suitable as dispersants; pour point depressants; VI improvers, defoamers, devolatilizers, flow control agents, tackifiers; compounds suitable as catalysts, and compounds suitable as crosslinkers.

21. Composition according to Claim 20, in which the compounds suitable as high-pressure additives are organic polysulphides based on sulphurized olefins; organic polysulphides based on sulphurized triglycerides, fatty acid esters, or fatty alcohols; organic polysulphides based on sulphurized oils; other sulphur compounds; organic chlorine compounds; or organic nitrogen compounds.

22. Composition according to Claim 20, in which the compounds suitable as antiwear additives are phosphorus components; phosphorus and sulphur derivatives; phosphorus and nitrogen compounds; or phosphorus and chlorine compounds.

23. Composition according to Claim 20, in which the compounds suitable as anticorrosion additives are neutralized alkali metal and alkaline earth metal salts of sulphonic acids and derivatives thereof; neutralized mono- and dicarboxylic acids and derivatives thereof; or fatty oil and fatty acid derivatives.

24. Composition according to Claim 20, in which the compounds suitable as nonferrous metal inhibiters are triazole derivatives or thiadiazole derivatives.

25. Composition according to Claim 20, in which the compounds suitable as antioxidants are alkyl-/aryl-substitute phenol derivatives, alkyl-/aryl-substituted amine derivatives; or other P- or S-containing phenol/amine derivatives.

26. Composition according to Claim 20, in which the compounds suitable as friction modifiers are metal-containing organic compounds or fatty acid or fatty alcohol derivatives.

27. Composition according to Claim 20, in which the compounds suitable as surfactants are detergents.

28. Composition according to Claim 20, in which the compounds suitable as dispersants are esterification products of dicarboxylic acids and glycols.

29. Composition according to Claim 21, in which the compounds suitable as catalysts are accelerators.

30. Composition according to Claim 22, in which the compounds suitable as crosslinkers are urea derivatives, triazine derivatives or carbamic acid derivatives.

31. Composition according to any one of Claims 1 to 30, in which the functional additive at a temperature of 120°C has a viscosity of less than 1000 mPas.

32. Composition according to any one of Claims 1 to 31, which contains 10 to 90% by weight of the microgel (B), based on the total amount of the composition.

33. Composition according to any one of Claims 1 to 31, which contains 10 to 90% by weight of the functional additive (C).

34. Composition according to any one of Claims 1 to 33, **characterized in that** it has been produced by mixing the functional additive (C) and the microgel (B), and if appropriate the non-crosslinkable organic medium (A), by means of a homogenizer, a bead mill (stirred ball mill), a triple roller system, a single-shaft or multishaft extruder screw, a kneader, an Ultra-Turrax machine and/or a dissolver.

35. Composition according to Claim 34, **characterized in that** it has been produced by means of a homogenizer, a bead mill (stirred ball mill), a triple roller system or a dissolver.

36. Composition according to any one of Claims 1 to 35, **characterized in that** it has a viscosity of 2 mPas up to 50 000 000 mPas at a speed of 5 s$^{-1}$, determined with a cone-and-plate measurement system according to DIN 53018 at 20°C.

37. Composition according to any one of Claims 1 to 36, **characterized in that** the microgel (B) possesses a swelling index in toluene at 23°C of 1 to 15.

38. Composition according to any one of Claims 1 to 37, **characterized in that** the microgels (B) have a level of insolubles in toluene at 23°C of at least 95% by weight.

39. Composition according to any one of Claims 1 to 38, **characterized in that** the microgel has not been modified with hydroxyl groups.

40. Composition according to any one of Claims 1 to 39, **characterized in that** the microgel has not been modified.

41. Use of the composition according to any one of Claims 1 to 40 for incorporation into thermoplastic polymers, rubbers or thermoplastic elastomers.

42. Use of the composition according to any one of Claims 1 to 30 for producing microgel-containing polymers.

43. Use according to Claim 42 for producing microgel-containing rubbers.

44. Use according to Claim 42 for producing microgel-containing thermoplastic elastomers.

45. Use of the compositions according to any one of Claims 1 to 40 for producing lubricants, mouldings or coatings.

46. Use according to Claim 45 for producing lubricant greases or modified lubricant oils.

47. Use of the compositions according to any one of Claims 1 to 40 as an additive for polymers, rubbers, coating materials or lubricants.

48. Polymers, rubbers, thermoplastic elastomers, coating materials or lubricants comprising the compositions according to Claim 1 or a claim dependent thereon.

49. Polymers, thermoplastic elastomers, coating materials or lubricants comprising the compositions according to Claim 3 or a claim dependent thereon.

**Revendications**

1. Composition contenant au moins un microgel (B) ainsi qu'au moins un additif fonctionnel (C) et au moins un milieu organique non réticulable (A).

2. Composition selon la revendication 1,
   **caractérisée en ce qu'**elle contient des pigments et/ou des charges.

3. Composition, constituée par un microgel (B) et au moins un additif fonctionnel (C).

4. Composition selon l'une quelconque des revendications 1 à 3, **caractérisée en ce que** les particules primaires du microgel (B) présentent une géométrie approximativement sphérique.

5. Composition selon l'une quelconque des revendications 1 à 4, **caractérisée en ce que** la déviation du diamètre d'une particule primaire individuelle du microgel (B), définie par

$$[(d1 - d2)/d2] \times 100,$$

où d1 et d2 sont deux diamètres quelconques de la particule primaire et d1 > d2, est inférieure à 250%.

6. Composition selon la revendication 5, où ladite déviation est inférieure à 50%.

7. Composition selon l'une quelconque des revendications 1 à 6, **caractérisée en ce que** les particules primaires du microgel (B) présentent une grosseur moyenne des particules de 5 à 500 nm.

8. Composition selon l'une quelconque des revendications 1 à 7, **caractérisée en ce que** les particules primaires du microgel (B) présentent une grosseur moyenne des particules inférieure à 99 nm.

9. Composition selon l'une quelconque des revendications 1 à 8, **caractérisée en ce que** les microgels (B) présentent, dans du toluène à 23°C, des proportions insolubles à raison d'au moins 70% en poids.

10. Composition selon l'une quelconque des revendications 1 à 9, **caractérisée en ce que** les microgels (B) présentent, dans du toluène à 23°C, un indice de gonflement inférieur à 80.

11. Composition selon l'une quelconque des revendications 1 à 10, **caractérisée en ce que** les microgels (B) présentent des températures de transition vitreuse de -100°C à +120°C.

12. Composition selon l'une quelconque des revendications 1 à 11, **caractérisée en ce que** le microgel (B) est un microgel réticulé, qui n'est pas réticulé par un rayonnement riche en énergie.

13. Composition selon l'une quelconque des revendications 1 à 12, **caractérisée en ce que** les microgels (B) présentent une largeur de la plage de transition vitreuse supérieure à 5°C.

14. Composition selon l'une quelconque des revendications 1 à 13, **caractérisée en ce que** les microgels (B) peut être obtenus par une polymérisation en émulsion.

15. Composition selon l'une quelconque des revendications 1 à 14, **caractérisée en ce que** le microgel (B) est à base de caoutchouc.

16. Composition selon l'une quelconque des revendications 1 à 15, **caractérisée en ce que** le microgel (B) est à base d'homopolymères ou de copolymères statistiques.

17. Composition selon l'une quelconque des revendications 1 à 16, **caractérisée en ce que** le microgel (B) est modifié par des groupes fonctionnels, réactifs par rapport aux doubles liaisons C=C.

18. Composition selon l'une quelconque des revendications 1 à 17, où l'additif fonctionnel (C) est au moins un composé qui contient au moins un hétéroatome, qui est choisi dans le groupe constitué par le soufre, le phosphore, l'azote, les halogènes, l'oxygène et les métaux.

19. Composition selon l'une quelconque des revendications 1 à 18, où l'additif fonctionnel (C) est au moins un composé qui contient au moins deux hétéroatomes, qui sont choisis dans le groupe constitué par le soufre, le phosphore, l'azote, les halogènes, l'oxygène et les métaux.

20. Composition selon l'une quelconque des revendications 1 à 19, où l'additif fonctionnel (C) est au moins un composé qui est choisi dans le groupe constitué par : des composés appropriés comme additifs haute pression ; des composés appropriés comme additifs de protection contre l'usure, des composés appropriés comme additifs de protection contre la corrosion ; des composés appropriés comme inhibiteurs des métaux non ferreux ; des composés appropriés comme antioxydants ; des composés appropriés comme agents de modification du frottement ; des composés appropriés comme substances tensioactives ; des composés appropriés comme dispersants ; des abaisseurs du point d'écoulement, agents d'amélioration de la viscosité, des antimousses, des désaérateurs, des adjuvants d'étalement, des agents adhésifs ; des composés appropriés comme catalyseurs et des composés appropriés comme réticulants.

**21.** Composition selon la revendication 20, où les composés appropriés comme additifs haute pression sont des polysulfures organiques à base d'oléfines soufrées ; des polysulfures organiques à base de triglycérides soufrés, d'esters d'acides gras soufrés ou d'alcools gras soufrés ; des polysulfures organiques à base d'huiles soufrées ; d'autres composés soufrés ; des composés organiques chlorés ; ou d'autres composés organiques azotés.

**22.** Composition selon la revendication 20, où les composés appropriés comme additifs de protection contre l'usure sont des composants phosphorés ; des dérivés phosphorés et soufrés ; des composés phosphorés et azotés ; ou des composés phosphorés et chlorés.

**23.** Composition selon la revendication 20, où les composés appropriés comme additifs de protection contre la corrosion sont des sels neutralisés de métal alcalin et alcalino-terreux d'acides sulfoniques et leurs dérivés ; des acides monocarboxyliques et dicarboxyliques neutralisés et leurs dérivés ; ou des dérivés d'huiles grasses et d'acides gras.

**24.** Composition selon la revendication 20, où les composés appropriés comme inhibiteurs de métal non ferreux sont des dérivés de triazole ou de thiadiazole.

**25.** Composition selon la revendication 20, où les composés appropriés comme antioxydants sont des dérivés de phénol substitués par alkyl/aryle, des dérivés d'amine substitués par alkyl-aryle ; ou d'autres dérivés de phénol/amine contenant du P ou du S.

**26.** Composition selon la revendication 20, où les composés appropriés comme agents de modification du frottement sont des composés organiques contenant du métal ou des dérivés d'acide gras ou d'alcool gras.

**27.** Composition selon la revendication 20, où les composés appropriés comme substances tensioactives sont des détergents.

**28.** Composition selon la revendication 20, où les composés appropriés comme dispersants sont des produits d'estérification d'acides dicarboxyliques et de glycols.

**29.** Composition selon la revendication 21, où les composés appropriés comme catalyseurs sont des accélérateurs.

**30.** Composition selon la revendication 22, où les composés appropriés comme réticulants sont des dérivés d'urée, de triazine ou d'acide carbamique.

**31.** Composition selon l'une quelconque des revendications 1 à 30, où l'additif fonctionnel présente, à une température de 120°C, une viscosité inférieure à 1000 mPa.s.

**32.** Composition selon l'une quelconque des revendications 1 à 31, qui contient 10 à 90% en poids du microgel (B), par rapport à la quantité totale de la composition.

**33.** Composition selon l'une quelconque des revendications 1 à 31, qui contient 10 à 90% en poids de l'additif fonctionnel (C).

**34.** Composition selon l'une quelconque des revendications 1 à 33, **caractérisée en ce qu'**elle a été préparée par mélange de l'additif fonctionnel (C) et du microgel (B) ainsi que le cas échéant du milieu organique non réticulable (A) au moyen d'un homogénéisateur, d'un broyeur à billes (broyeur à billes et à agitateur), d'un broyeur à trois cylindres, d'une vis sans fin extrudeuse à un ou plusieurs arbres, d'un malaxeur, d'un appareil Ultra-Turrax et/ou d'un Dissolver.

**35.** Composition selon la revendication 34, **caractérisée en ce qu'**elle a été préparée au moyen d'un homogénéisateur, d'un broyeur à billes (broyeur à billes et à agitateur), d'un broyeur à trois cylindres ou d'un Dissolver.

**36.** Composition selon l'une quelconque des revendications 1 à 35, **caractérisée en ce qu'**elle présente une viscosité de 2 mPa.s jusqu'à 50 000 000 mPa.s à une vitesse de rotation de 5 s$^{-1}$ déterminée au moyen d'un système de mesure à cône-plaque selon la norme DIN 53018 à 20°C.

**37.** Composition selon l'une quelconque des revendications 1 à 36, **caractérisée en ce que** le microgel (B) présente un indice de gonflement dans du toluène à 23°C de 1 à 15.

**38.** Composition selon l'une quelconque des revendications 1 à 37, **caractérisée en ce que** les microgels (B) présentent, dans du toluène à 23°C, des proportions insolubles à raison d'au moins 95% en poids.

**39.** Composition selon l'une quelconque des revendications 1 à 38, **caractérisée en ce que** le microgel n'est pas modifié par des groupes hydroxyle.

**40.** Composition selon l'une quelconque des revendications 1 à 39, **caractérisée en ce que** le microgel n'est pas modifié.

**41.** Utilisation de la composition selon l'une quelconque des revendications 1 à 40 pour l'incorporation dans des matériaux synthétiques thermoplastiques, des caoutchoucs ou des élastomères thermoplastiques.

**42.** Utilisation de la composition selon l'une quelconque des revendications 1 à 30 pour la préparation de polymères contenant un microgel.

**43.** Utilisation selon la revendication 42 pour la préparation de caoutchoucs contenant un microgel.

**44.** Utilisation selon la revendication 42 pour la préparation d'élastomères thermoplastiques contenant un microgel.

**45.** Utilisation des compositions selon l'une quelconque des revendications 1 à 40 pour la préparation de lubrifiants, de corps façonnés ou de revêtements.

**46.** Utilisation selon la revendication 45 pour la préparation de graisses lubrifiantes ou d'huiles lubrifiantes modifiées.

**47.** Utilisation des compositions selon l'une quelconque des revendications 1 à 40 comme additif pour des matériaux synthétiques, des caoutchoucs, des agents de revêtement ou des lubrifiants.

**48.** Matériaux synthétiques, caoutchoucs, élastomères thermoplastiques, agents de revêtement ou lubrifiants, contenant les compositions selon la revendication 1 ou selon l'une quelconque des revendications dépendantes de celle-ci.

**49.** Matériaux synthétiques, élastomères thermoplastiques, agents de revêtement ou lubrifiants, contenant les compositions selon la revendication 3 ou selon l'une quelconque des revendications dépendantes de celle-ci.

Abb. 1: Funktionsweise des Homogenisierventils

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4220563
- GB 1078400 A
- EP 405216 A
- EP 854171 A
- DE 3742180 A
- EP 2004052290 W
- EP 1203786 A
- DE 4220563 A
- DE 19701489
- DE 19701488
- DE 19834804
- DE 19834803
- DE 19834802
- DE 19929347
- DE 19939865
- DE 19942620
- DE 19942614
- DE 10021070
- DE 10038488
- DE 10039749
- DE 10052287
- DE 10056311
- DE 10061174
- US 5302696 A
- US 5442009 A
- US 2187146 A

**In der Beschreibung aufgeführte Nicht-Patentliteratur**

- *Chinese Journal of Polymer Science,* 2002, vol. 20 (2), 93-98
- *DIN,* vol. 53206, 1992-08
- **LACKE ; DRUCKFARBEN.** Römpp Lexikon. Georg Thieme Verlag, 1998
- **H.G. ELIAS.** *Makromoleküle,* 1992, vol. 2, 99 ff
- **HOUBEN-WEYL.** *Methoden der organischen Chemie,* vol. 14/2, 848
- **Brock ; Thomas ; Groteklaes ; Michael ; Mischke ; Peter.** Lehrbuch der Lacktechnologie. Curt R. Vincentz Verlag Hannover, 1998, 93